# EUROPEAN PATENT APPLICATION

(11) **EP 4 375 324 A1**
(43) Date of publication of application: **29.05.2024**
(21) Application number: 22209272.8
(22) Date of filing: 24.11.2022
(51) Int. Cl.: C08K 5/01, C08K 5/14, C08K 5/372, C08L 23/08, H01B 3/44

(54) **CROSSLINKABLE STABILIZED POLYMER COMPOSITION**

(71) Applicant: Abu Dhabi Polymers Co. Ltd (Borouge) - Sole Proprietorship L.L.C., Abu Dhabi (AE); Borealis AG, 1020 Vienna (AT)
(72) Inventor: QUDAIH, Rana, Abu Dhabi (AE); SMEDBERG, Annika, 44486 Stenungsund (SE)
(74) Representative: Maiwald GmbH

(57) **Abstract**

The invention is directed to a crosslinkable polyethylene composition comprising an additive composition consisting of polyethylene glycol and a mixture of 4,4'-thiobis (2-tertbutyl-5-methylphenol) plus thiodiethylene bis[3-(3,5-di-tert-butyl-4-hydroxyphenyl)propionate].

## Description

### Field of the Invention

The present invention concerns stabilized polymer compositions which can be crosslinked. Such compositions are inter alia used as insulation of electric cables, particularly cables being exposed to water.

### Background

A typical electric power cable generally comprises one or more conductors in a cable core that is surrounded by several layers of polymeric materials including an inner semiconducting layer, followed by an insulating layer, and then an outer semiconducting layer. These layers are normally crosslinked. To these layers, further layers may be added, such as a metallic tape or wire shield, and finally a jacketing layer. In electrically strained polymer materials, subjected to the presence of water, so called "water treeing" can occur. This is a degradation mechanism that may result in lower electric breakdown strength, Eb, of the insulation system. The crosslinking by peroxides may result in the formation of so-called "scorch", i.e. inhomogeneities, surface unevenness and possible discoloration. Thus, any significant decomposition of free-radical forming agents during extrusion should be avoided whereby scorch-retarders are used as additives. "Scorch retarders" are components to reduce the formation of scorch during extrusion of a polymer composition if compared to the same polymer composition extruded without said component with typical examples being 2,4-diphenyl-4-methyl-1-pentene, substituted or unsubstituted diphenylethylene, quinone derivatives, hydroquinone derivatives, monofunctional vinyl containing esters and ethers, or mixtures thereof. Apart from good scorch retardancy, a high degree of crosslinking and good thermo-oxidative stability is important for applications such as cables.

EP3045496 concerns a crosslinked polyethylene resin composition comprising a) 100 parts by weight of low-density polyethylene (LDPE) which can be an ethylene homopolymer or an ethylene copolymer with the comonomer being selected from the group consisting of propylene, 1-butene, 1-pentene, 1-hexene and 1-octene, b) 0.1 to 10 parts by weight of a crosslinking agent, c) 0.1 to 5 parts by weight of a crosslinking facilitator selected from the group consisting of, for example, 2,4-diphenyl-4-methyl-1-pentene, 1,4-hydroquinone and hydroquinone derivatives, d) 0 to 5 parts by weight of a treeing inhibitor such as polyethylene glycol, and e) greater than 0.3 parts by weight and 5 parts by weight or less of an antioxidant being a mixture of, for example, a thiobisphenol-based antioxidant and a thiobispropionate-based antioxidant. There are no polar groups in the low-density polyethylene (LDPE).

EP966003 describes a polyethylene, 100 part, and 0.3-0.6 parts by weight of antioxidants selected from 4,4'-thiobis(2-methyl-6-t-butylphenol), 4,4'-thiobis(2-t-butyl-5-methylphenol) or 2,2'-thiobis(6-t-butyl-4-methylphenol) together with 0.4 to 1 part of a polyethylene glycol with a weight average molecular weight of 1000-100000. CA2650428 concerns a composition including i) 100 parts by weight of polyethylene being homopolymer made by polymerization under high temperature and high pressure by free radical initiated reaction in a tubular or autoclave reactor, or alternatively a copolymer made by copolymerization of ethylene and comonomer by using a Ziegler-Natta catalyst or a metallocene catalyst under low temperature and low pressure or copolymer of at least one alpha olefin selected from the group consisting of 1-butene, 1-hexene, 4-methyl-1-pentene and 1-octene; and based on 100 parts by weight of the polyethylene, ii) 1 to 4 parts by weight of chemical cross-linking agent; iii) 0.3 to 0.8 parts by weight of antioxidant; and iv) 0.3 to 1.0 parts by weight of polyethylene glycol having a molecular weight in the range of 5000 to 50000. In addition, the tree resistant, cross-linkable polyolefin composition may further include 0.1 to 1.0 parts by weight of 2,4-diphenyl-4-methyl-1-pentene. CA2650428 teaches the use of a mixture including 4,4'-thiobis(2-t-butyl-5-methylphenol) and at least one selected from the group consisting of tetrakis[methylene(3,5-di-tert-butyl-4-hydroxy-hydrocinnamate)]methane, 4,6-bis(octylthiobutyl)-o-cresol and 2,2'-thiobis[ethyl-3-(3,5-di-tert-butyl-4-hydrophenyl)]-propionate as the antioxidant.

EP1731564 discloses a crosslinkable polymer composition, comprising: (i) an unsaturated polyolefin having a total amount of vinyl groups/1000 carbon atoms of more than 0.37 and (ii) at least one ether and/or ester group containing additive selected from the group consisting of polyethylene glycol, a glycerol ester compound, polypropylene glycol, an amido group containing fatty acid ester, ethoxylated and/or propoxylated pentaerythritol, an alpha-tocopherol ester, an ethoxylated and/or propoxylated fatty acid, and derivatives thereof. EP1731564 further refers to the use of an antioxidant and optionally a mixture of two or more antioxidants merely mentioning sterically hindered or semi-hindered phenols, aromatic amines, aliphatic sterically hindered amines, organic phosphates, thio compounds, and mixtures thereof.

There remains still the need for a crosslinkable composition yielding a good balance of water tree retardancy, degree of crosslinking, scorch resistance, thermo-oxidative stability and also storage stability, i.e. low migration of the additives to the pellet surface during storage.

### Summary of the Invention

The present invention provides
a crosslinkable polymer composition, comprising
i) a low density polyethylene (LDPE) copolymer with at least one, preferably one polyunsaturated comonomer optionally in combination with one or more further comonomers: and and
   i) an additive composition consisting of polyethylene glycol and a mixture of 4,4'-thiobis (2-tertbutyl-5-methylphenol) plus thiodiethylene bis[3-(3,5-di-tert-butyl-4-hydroxyphenyl)propionate]; and
   ii) a peroxide crosslinking agent; and
   iii) a scorch retarding agent.

The present invention further concerns a material obtained by crosslinking said crosslinkable polymer composition as described herein.

In yet a further aspect, the present invention concerns the use of the inventive crosslinkable polymer composition according to the present invention for cables.

The present invention further concerns cables including the material as described herein.

The present invention is based on the surprising finding that an additive composition consisting of polyethylene glycol and a mixture of 4,4'-thiobis (2-tertbutyl-5-methylphenol) plus thiodiethylene bis[3-(3,5-di-tert-butyl-4-hydroxyphenyl)propionate] yields a very good and unexpected balance of properties.

A low density polyethylene (LDPE) copolymer with at least one, preferably one polyunsaturated comonomer optionally in combination with one or more further comonomers is a polyethylene copolymer derived from ethylene monomer units and polyunsaturated monomer units.

Crosslinkable" means that the polymer composition can be crosslinked using the incorporated peroxide crosslinking agent(s) before the use in the end application thereof.

After crosslinking, a crosslinked polymer composition having a typical network, i.a. interpolymer crosslinks (bridges), as well known in the field is obtained.

"Unsaturated ethylene acrylate polymer_{"}" denotes a copolymer containing at least units originating from ethylene as monomer and units originating from an acrylate monomer, for example an alkyl acrylate and/or alkylmethacrylate.

A 'scorch retarder' is a compound that reduces premature crosslinking, i.e. formation of "scorch during extrusion. Besides scorch retarding properties, the scorch retarder may simultaneously result in further effects like boosting, i.e. enhancing crosslinking performance.

As evident for a skilled person, the crosslinked polymer composition can be and is defined herein with features that are present in the polymer composition, polymer (i) before or after the crosslinking, as stated or evident from the context.

Preferably, the low density polyethylene (LDPE) copolymer with at least one, particularly one polyunsaturated comonomer optionally in combination with one or more further comonomers is an unsaturated ethylene acrylate polymer.

It is further preferred that the low density polyethylene (LDPE) copolymer with at least one, particularly one polyunsaturated comonomer optionally in combination with one or more further comonomers has a total amount of vinyl groups per 1000 carbon atoms of more than 0.40 (as described herein).

The low density polyethylene (LDPE) copolymer with at least one, preferably one polyunsaturated comonomer optionally in combination with one or more further comonomers, particularly the unsaturated ethylene acrylate polymer is preferably a terpolymer.

In a preferred aspect, the unsaturated ethylene acrylate polymer is selected from the list consisting of unsaturated ethylene methylacrylate polymer, unsaturated ethylene ethylacrylate polymer, unsaturated ethylene butylacrylate polymer and mixtures thereof. More preferably the unsaturated ethylene acrylate polymer is an ethylene butylacrylate terpolymer. Most preferably the unsaturated ethylene acrylate polymer is an unsaturated ethylene acrylate non-conjugated diene terpolymer.

The non-conjugated diene is preferably selected from the group consisting of 1,7-octadiene, 1,9-decadiene, 1,11-dodecadiene, 1,13-tetradecadiene, 7-methyl-1,6-octadiene, 9-methyl-1,8-decadiene, and mixtures thereof.

The crosslinkable polymer composition according to the present invention preferably comprises
i) more than 95.5 w.-%, more preferably more than 96.0 wt.-% based on the total weight of the crosslinkable polymer composition of the low density polyethylene (LDPE) copolymer with at least one polyunsaturated comonomer optionally in combination with one or more further comonomers, preferably of the unsaturated ethylene acrylate polymer, and
ii) 0.50 to 1.65 wt.-%, more preferably 0.90 to 1.20 wt.-% based on the total weight of the crosslinkable polymer composition of an additive composition consisting of polyethylene glycol and a mixture of 4,4'-thiobis (2-tertbutyl-5-methylphenol), plus thiodiethylene bis[3-(3,5-di-tert-butyl-4-hydroxyphenyl)propionate];
iii) up to 1.80 wt.-% based on the total weight of the crosslinkable polymer composition of a peroxide crosslinking agent; and
iv) 0.1 to 0.5 wt.-% based on the total weight of the crosslinkable polymer composition of a scorch retarding agent.

In a preferred embodiment, the crosslinkable polymer composition according to the present invention preferably comprises
i) more than 96.0 wt.-% based on the total weight of the crosslinkable polymer composition of the low density polyethylene (LDPE) copolymer with at least one polyunsaturated comonomer optionally in combination with one or more further comonomers, preferably of the unsaturated ethylene acrylate polymer, and
ii) 0.90 to 1.20 wt.-% based on the total weight of the crosslinkable polymer composition of an additive composition consisting of polyethylene glycol and a mixture of 4,4'-thiobis (2-tertbutyl-5-methylphenol), plus thiodiethylene bis[3-(3,5-di-tert-butyl-4-hydroxyphenyl)propionate];
iii) up to 1.80 wt.-% based on the total weight of the crosslinkable polymer composition of a peroxide crosslinking agent; and
iv) 0.1 to 0.5 wt.-% based on the total weight of the crosslinkable polymer composition of a scorch retarding agent.

More preferably, the crosslinkable polymer compositions (as described directly above) are characterized by additives v) other than contained in the additive composition (ii) and/or other than scorch retarding agent iv) in a total amount of less than 0.40 wt.-% based on the total weight of the crosslinkable polymer composition, and
whereby components i), ii), iii), iv), and v) add up to 100 wt.-%. It is particularly preferred that component i) is the balancing component to add up to 100 wt.-%. Abbreviation "v)" stands for "additives other than contained in said additive composition ii) and other than contained in the scorch retarding agent iv).

In an independently and particularly preferred aspect, 4,4'-thiobis (2-tertbutyl-5-methylphenol) is present in an amount of 0.12 to 0.22 wt.-% with respect to the total crosslinkable polymer composition.

In yet a further and also independently preferred aspect, thiodiethylene bis[3-(3,5-di-tert-butyl-4-hydroxyphenyl)propionate] is present in an amount of 0.10 to 0.40 wt.-% with respect to the total crosslinkable polymer composition.

Most preferably, 4,4'-thiobis (2-tertbutyl-5-methylphenol) is present in an amount of 0.12 to 0.22 wt.-% with respect to the total crosslinkable polymer composition and thiodiethylene bis[3-(3,5-di-tert-butyl-4-hydroxyphenyl)propionate] is present in an amount of 0.10 to 0.40 wt.-% with respect to the total crosslinkable polymer composition.

In yet a further aspect, polyethylene glycol is present in an amount 0.30 to 1.00 wt.-% and preferably of 0.40 to 0.80 wt.-% with respect to the total crosslinkable polymer composition.

The present invention is also concerned with use of the crosslinkable polymer composition as described herein for cables.

In another aspect, the present invention is concerned with a material as obtained by crosslinking the crosslinkable polymer composition as described herein.

Said material is preferably characterized in that extruded model cables have a breakdown strength, expressed by the Weibull 63.2% value, referred to as Eb(63%) in this invention being determined after 1000 hours of wet ageing as described in the specification of at least 75.0 kV/mm, preferably of at least 80.0 kV/mm and more preferably of at least 85.0 kV/mm.

The present invention also concerns a cable comprising the material as described herein. The cable is preferably a power cable.

### Detailed Description

In the following several preferred embodiments shall be described. These embodiments may be combined with any preferred aspect as discussed above as far as appropriate.

A first preferred embodiment is a crosslinkable polymer composition, comprising
i) an unsaturated ethylene acrylate polymer having a total amount of vinyl groups per 1000 carbon atoms of more than 0.40 (as described herein), whereby said unsaturated ethylene acrylate polymer is unsaturated ethylene acrylate non-conjugated diene terpolymer; and
ii) an additive composition consisting of polyethylene glycol and a mixture of 4,4'-thiobis (2-tertbutyl-5-methylphenol) plus thiodiethylene bis[3-(3,5-di-tert-butyl-4-hydroxyphenyl)propionate]; and
iii) a peroxide crosslinking agent; and
iv) a scorch retarding agent.

A second preferred embodiment is a crosslinkable polymer composition, comprising
i) more than 96.0 wt.-% based on the total weight of the crosslinkable polymer composition of an unsaturated ethylene acrylate polymer having a total amount of vinyl groups per 1000 carbon atoms of more than 0.40 (as described herein); and
ii) 0.90 to 1.20 wt.-% based on the total weight of the crosslinkable polymer composition of an additive composition consisting of polyethylene glycol and a mixture of 4,4'-thiobis (2-tertbutyl-5-methylphenol) plus thiodiethylene bis[3-(3,5-di-tert-butyl-4-hydroxyphenyl)propionate]; and
iii) up to 1.80 wt.-% based on the total weight of the crosslinkable polymer composition of a peroxide crosslinking agent; and
iv) 0.1 to 0.5 wt.-% based on the total weight of the crosslinkable polymer composition of a scorch retarding agent.

A third particularly preferred embodiment is a crosslinkable polymer composition, comprising
i) more than 96.0 wt.-% based on the total weight of the crosslinkable polymer composition of an unsaturated ethylene acrylate polymer having a total amount of vinyl groups per 1000 carbon atoms of more than 0.40 (as described herein), whereby said unsaturated ethylene acrylate polymer is unsaturated ethylene acrylate non-conjugated diene terpolymer; and
ii) 0.90 to 1.20 wt.-% based on the total weight of the crosslinkable polymer composition of an additive composition consisting of polyethylene glycol and a mixture of 4,4'-thiobis (2-tertbutyl-5-methylphenol) plus thiodiethylene bis[3-(3,5-di-tert-butyl-4-hydroxyphenyl)propionate]; and
iii) up to 1.80 wt.-% based on the total weight of the crosslinkable polymer composition of a peroxide crosslinking agent; and
iv) 0.1 to 0.5 wt.-% based on the total weight of the crosslinkable polymer composition of a scorch retarding agent.

A fourth particularly preferred embodiment is a crosslinkable polymer composition, comprising
i) more than 96.0 wt.-% based on the total weight of the crosslinkable polymer composition of an unsaturated ethylene acrylate polymer having a total amount of vinyl groups per 1000 carbon atoms of more than 0.40 (as described herein), whereby said unsaturated ethylene acrylate polymer is unsaturated ethylene acrylate non-conjugated diene terpolymer; and
ii) 0.90 to 1.20 wt.-% based on the total weight of the crosslinkable polymer composition of an additive composition consisting of polyethylene glycol and a mixture of 4,4'-thiobis (2-tertbutyl-5-methylphenol) plus thiodiethylene bis[3-(3,5-di-tert-butyl-4-hydroxyphenyl)propionate];
   whereby
   4,4'-thiobis (2-tertbutyl-5-methylphenol) is present in an amount of 0.12 to 0.22 wt.-% with respect to the total crosslinkable polymer composition; and whereby
   thiodiethylene bis[3-(3,5-di-tert-butyl-4-hydroxyphenyl)propionate] is present in an amount of 0.10 to 0.40 wt.-% with respect to the total crosslinkable polymer composition;
      and
iii) up to 1.80 wt.-% based on the total weight of the crosslinkable polymer composition of a peroxide crosslinking agent; and
iv) 0.1 to 0.5 wt.-% based on the total weight of the crosslinkable polymer composition of a scorch retarding agent.

Further preferred embodiments are materials as obtained of by crosslinking the crosslinkable polymer composition as described in the preferred embodiments above. Further particularly preferred embodiments are cables comprising these materials. The above mentioned specific embodiments can be combined with any of the disclosed preferred ranges of the general description.

### Experimental Part

### Measurement methods

The following definitions of terms and determination methods apply for the above general description of the invention as well as to the below examples unless otherwise defined.

### a) Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylenes and may be determined at different loadings such as 2.16 kg (MFR₂) or 21.6 kg (MFR₂₁).

### b) Density

The density was measured according to ISO 1183-1/ method A. Sample preparation was done by compression moulding in accordance with ISO 17855-2 :2016.

### c) Crosslinking of plaque

The crosslinked plaque was prepared either from pellets of the test polymer composition or from an extruded tape of the test polymer composition, i.e. a polymer composition comprising the polymer composition according to the present invention and a polymer composition comprising a comparative polymer composition, which were compression moulded using the following conditions: First the pellets were melted at 120 °C for 1 min under a pressure of 61 N/cm². Then the temperature was increased to 180 °C at a rate of 18 °C/min and at the same time the pressure was increased to 614 N/cm². This temperature was maintained at 180 °C for 8 min. The total crosslinking time was 12 minutes which includes the time for increasing the temperature from 120 °C to 180 °C. After completed crosslinking the crosslinked plaques, i.e. the crosslinked polymer composition according to the present invention and the crosslinked comparative polymer composition, are cooled to room temperature with a cooling rate of 15 °C/min still under pressure. The final thickness of the crosslinked plaque is around 1.0 mm for the crosslinked plaques to be used for the hot set measurements. The details for the extrusion of the tape sample is described under 'Sample preparation for thermo-oxidative ageing and thermo-oxidative ageing' below.

### d) Hot set method for sample from crosslinked plaques

The hot set elongation, as well as the permanent deformation were determined on samples taken from crosslinked plaques, i.e. a crosslinked polymer composition comprising the polymer composition according to the present invention and of a crosslinked polymer composition comprising a comparative composition. These properties were determined according to IEC 60811-507:2012. In the hot set test, a dumbbell of the tested material is equipped with a weight corresponding to 20 N/cm². First of all the specimens were marked with reference lines. From the middle of the specimen, two reference lines (one on each side) are made. The distance between the two lines, L0 was 20 mm. This specimen was put into an oven at 200 °C with the weight corresponding to 20 N/cm² and after 15 minutes, the hot set elongation was measured as follows. The distance between the reference lines after 15 minutes at 200 °C is called L1 and was measured. Then the elongation after 15 minutes was calculated as follows: hot set elongation (%) = ((L1*100)/L0)-100. Subsequently, the weight was removed and the sample was allowed to relax for 5 minutes at 200 °C. Then, the sample was taken out from the oven and was cooled down to room temperature. After cooling, the distance L2 between the two reference lines was measured and the permanent deformation was calculated as follows: permanent deformation (%) = ((L2*100)/L0)-100.

The crosslinked plaques were prepared as described under Preparation of crosslinked plaques, i.e. the method for crosslinking a plaque, and the dumbbell specimens were prepared from a around 1.0 mm thick crosslinked plaque according to ISO 527-2/5A.

### e) Monsanto scorch

The resistance to scorch formation of the different formulations was evaluated in a Monsanto MDR2000 rheometer. The experiments were carried out using press-moulded circular plaques having a thickness of around 3 mm. The circular plaque was pressed at 120 °C for 2 minutes without pressure followed by 2 minutes at a pressure of 5 tons. Then, the plaque was cooled to room temperature. The increase in torque was monitored as a function of time in the Monsanto rheometer. The time needed to reach a certain increase in torque was determined. In this case, the time it takes, from the start of the test, until an increase of 1 dNm in torque from the minimum value in the torque curve has been reached, is reported. The longer time it takes, the more resistant is the tested formulation to the formation of scorch. Data was generated using a temperature of 135 °C for the inventive polymer composition as well as for the comparative polymer composition.

### f) Sample preparation for Thermo-oxidative ageing and Thermo-oxidative ageing

Pellets containing the inventive polymer composition and pellets containing the comparative polymer composition, respectively, were extruded into a tape of around 0.6-0.7 mm thickness by use of a Collin Teach-Line E 20 T tape extruder using the following temperature settings: 60 °C (zone 1), 115 °C (zone 2), 120 °C (zone 3) and 125 °C (zone 4 to 6). These tapes, of respective composition, were then used to prepare a crosslinked plaque by placing all the tapes in one direction and then following the 'Crosslinking of plaque' description given above with the change that the thickness of the plaque should be around 2 mm instead. The dumbbell specimens are prepared from the crosslinked plaque according to ISO 527-2/5A. Prior to the thermo-oxidative ageing the dumbbell shaped specimens are conditioned for 24 h at 70 °C. Then the dumbbell shaped specimens are placed in a cellular oven at 150 °C and aged for different ageing times using 15 airchanges per hour. A 'zero' sample was collected after the conditioning step for a determination of the tensile properties of the inventive composition as well as of the comparative composition before start of the thermo-oxidative ageing. The thermo-oxidative ageing performance was monitored by use of tensile testing of samples taken out from the oven out after the different ageing times. Prior to the tensile testing the samples were kept in a constant room (23 °C and 50 % relative humidity) for at least 16 h. 6 to 8 samples were tensile tested for each sample take out (ageing time) and the draw speed used was 250 mm/min. The tensile testing is performed at 23 °C and 50 % relative humidity.

### g) Determination of additive contents on pellet surface

For the storage study 150 g of pellets of the crosslinkable inventive composition were placed in an aluminium bag that was sealed. One bag of pellets was prepared for each sample take out. The bags containing the pellets were stored for 12 months at 23°C and for 12 months at 35 °C respectively. The content of the components on the pellet surface was determined by placing 100 g of pellets in an 800 ml beaker with magnetic stirrer. 100 ml of methanol was added and then the pellets were stirred in the methanol for 5 minutes. A 5 ml sample was taken from the solvent with a syringe.

When the solution was transferred from the syringe to the vial to be used for the HPLC analysis the solution was passed through a filter placed at the tip of the syringe. The contents of the components (DCP, antioxidants and scorch retarder) in the solution were determined via HPLC analysis. This test was done on the 'zero' sample at the start of the storage test as well as after storing the pellets for 12 months at 23°C and for 12 months at 35 °C respectively. The HPLC analyses were done using a C18-SB (150 x 4.6 mm) column such as Zorbax. The injection volume of the methanol solution was 10 µl. The isocratic elution at 1 ml/min was done with a methanol water mixture (89:11% by volume) at 28 °C.

### f) Wet ageing

The wet ageing test is based on a procedure described in a paper by H.G. Land and H. Schädlich, "Model Cable Test for Evaluating the Ageing Behaviour under Water Influence of Compounds for Medium Voltage Cables", Conference Proceedings of Jicable 91, June 24 to 28, 1991, Versailles, France and in a paper by U.H. Nilsson, "The Use of Model Cables for Evaluation of the Electrical Performance of Polymeric Power Cable Materials", Conference Proceedings of NORD-IS, June 13 to 15, 2005, Trondheim, Norway.

The wet ageing properties were evaluated on model cables. These model cables consist of a 1.38 mm in diameter Cu wire onto which an inner semiconductive layer, an insulation layer and an outer semiconductive layer are applied by extrusion. The model cable has the following construction: inner semiconductive layer of 0.70 mm, insulation layer of 1.50 mm and outer semiconductive layer of 0.15 mm. The crosslinkable inventive composition was used as insulation material and LE0592 (supplied by Borealis) was used as the inner semiconductive layer as well as the outer semiconductive layer. The cable was extruded and vulcanized in a dry-curing CCV line, i.e. the material was crosslinked after the cable production. The line speed used was 15 m/minutes. After this, the crosslinked model cables were preconditioned at 80 °C for 72 h.

Then the Cu wire used during the extrusion was removed and replaced by a thinner Cu wire to allow filling the conductor area with water. The cables were put into the water bath and aged for 1000 h under 50 Hz using a voltage of 9 kV and at a temperature of 70 °C of the surrounding water and at a conductor temperature of 85 °C. The initial electrical breakdown strength as well as the breakdown strength after 1000 h wet ageing were determined. The cables were prepared and aged as described below.

| | | |
|---|---|---|
| - | Dry preconditioning (degassing): | 80 °C, 72 h in oven |
| - | Applied voltage: | 9 kV/50 Hz |
| - | Electric stress (max): | 9 kV/mm |
| - | Electric stress (mean) | 6 kV/mm |
| - | Conductor temperature: | 85 °C |
| - | Water bath temperature: | 70 °C |
| - | Ageing time: | 1000 h |
| - | Quality of water in conductor and outside: | Deionized |

From the extruded cable length ten cable specimens with 0.5 m active length were collected and put on ageing. After wet-ageing these ten cable specimens were subjected to AC breakdown tests conducted at ambient temperature using a voltage ramp of 100 kV/min until breakdown occured. The Weibull 63.2 % value of the breakdown strength (field stress at the inner semiconductive layer) after 1000 h of wet ageing is reported as Eb63%, 1000 h. Another five non-aged cable specimens, also with 0.5 m active length were also subjected to AC breakdown tests using the same conditions as described above to determine the initial Eb, Eb63 % 0h.

### h) Comonomer contents

a) Quantification of alpha-olefin content in low density polyethylenes by NMR spectroscopy: The comonomer content was determined by quantitative ¹³C nuclear magnetic resonance (NMR) spectroscopy after basic assignment (J. Randall JMS - Rev. Macromol. Chem. Phys., C29(2&3), 201-317 (1989)). Experimental parameters were adjusted to ensure measurement of quantitative spectra for this specific task.

Specifically solution-state NMR spectroscopy was employed using a Bruker Avance III 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 °C. Proton decoupled ¹³C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 °C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.

Quantities were calculated using simple corrected ratios of the signal integrals of representative sites based upon methods well known in the art.
b) Determination of comonomer content of polar comonomers in low density polyethylene comonomer content (wt%) was determined in a known manner based on

Fourier transform infrared spectroscopy (FTIR) determination calibrated with quantitative nuclear magnetic resonance (NMR) spectroscopy.

Films were pressed using a Specac film press at 150°C, approximately at 5 tons, 1-2 minutes, and then cooled with cold water in a not controlled manner. The accurate thickness of the obtained film samples was measured.

After the analysis with FTIR, base lines in absorbance mode were drawn for the peaks to be analyzed. The absorbance peak for the comonomer was normalized with the absorbance peak of polyethylene. An FTIR peak height ratio was correlated to the polar comonomer content by reference materials determined by NMR. The NMR spectroscopy calibration procedure was undertaken in the conventional manner which is well documented in the literature.

Quantification of polar comonomer content in in polymers by NMR spectroscopy The polar comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York).

Experimental parameters were adjusted to ensure measurement of quantitative spectra for this specific task (e.g. "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

Below is exemplified the determination of the polar comonomer content of ethylene ethyl acrylate, ethylene butyl acrylate and ethylene methyl acrylate.

The weight-% can be converted to mol-% by calculation. It is well documented in the literature.

### (1) Ethylene copolymers containing butyl acrylate

Film samples of the polymers were prepared for the FTIR measurement: 0.5-0.7 mm thickness was used for ethylene butyl acrylate >6 wt% butyl acrylate content and 0.05 to 0.12 mm thickness was used for ethylene butyl acrylate <6 wt% butyl acrylate content.

After the FT-IR analysis the maximum absorbance for the peak for the butyl acrylate >6 wt% at 3450 cm⁻¹ was subtracted with the absorbance value for the base line at 3510 cm⁻¹ (A_{butyl acrylate} - A₃₅₁₀). Then the maximum absorbance peak for the polyethylene peak at 2020 cm⁻¹ was subtracted with the absorbance value for the base line at 2120 cm⁻¹ (A₂₀₂₀ -A₂₁₂₀). The ratio between (A_{butyl acrylate}-A₃₅₁₀) and (A₂₀₂₀-A₂₁₂₀) was then calculated in the conventional manner, which is well documented in the literature.

The maximum absorbance for the peak for the comonomer butyl acrylate <6 wt% at 1165 cm⁻¹ was subtracted with the absorbance value for the base line at 1865 cm⁻¹ (A_{butyl acrylate} - A₁₈₆₅). Then the maximum absorbance peak for polyethylene peak at 2660 cm⁻¹ was subtracted with the absorbance value for the base line at 1865 cm⁻¹ (A₂₆₆₀ - A₁₈₆₅). The ratio between (A_{butyl acrylate}-A₁₈₆₅) and (A₂₆₆₀-A₁₈₆₅) was then calculated.

### (2) Ethylene copolymers containing ethyl acrylate

Film samples of the polymers were prepared for the FTIR measurement: 0.5 mm thickness was used for ethylene ethyl acrylate.

After the FT-IR analysis the maximum absorbance for the peak for the ethyl acrylate at 3450 cm⁻¹ with linear baseline correction applied between approximately 3205 and 3295 cm⁻¹ (A_{ethyl acrylate}) was determined. Then the maximum absorbance peak for the polyethylene peak at 2020 cm⁻¹ with linear baseline correction applied between approximately 1975 and 2120 cm⁻¹ was determined (A₂₀₂₀). The ratio between (A_{ethyl acrylate}) and (A₂₀₂₀) was then calculated in the conventional manner, which is well documented in the literature.

### (3) Ethylene copolymers containing methyl acrylate

Film samples of the polymers were prepared for the FTIR measurement: 0.1 mm thickness was used for ethylene methyl acrylate >8 wt% methyl acrylate content and 0.05 mm thickness was used for ethylene methyl acrylate <8 wt% methyl acrylate content.

After the analysis the maximum absorbance for the peak for the methyl acrylate >8 wt% at 3455 cm⁻¹ was subtracted with the absorbance value for the base line at 3510 cm⁻¹ (A_{methylacrylate} - A₃₅₁₀). Then the maximum absorbance peak for the polyethylene peak at 2675 cm⁻¹ was subtracted with the absorbance value for the base line at 2450 cm⁻¹ (A₂₆₇₅ -A₂₄₅₀). The ratio between (A_{methyl acrylate}-A₃₅₁₀) and (A₂₆₇₅-A₂₄₅₀) was then calculated in the conventional manner which is well documented in the literature. The maximum absorbance for the peak for the comonomer methyl acrylate <8 wt% at 1164 cm⁻¹ was subtracted with the absorbance value for the base line at 1850 cm⁻¹ (A_{methyl acrylate} - A₁₈₅₀). Then the maximum absorbance peak for polyethylene peak at 2665 cm⁻¹ was subtracted with the absorbance value for the base line at 1850 cm⁻¹ (A₂₆₆₅ - A₁₈₅₀). The ratio between (A_{methyl acrylate}-A₁₈₅₀) and (A₂₆₆₅-A₁₈₅₀) was then calculated.

### i) Methods ASTM D3124-98, and ASTM D6248-98, to determine amount of double bonds in the polymer, i.e. the polyethylene

The methods ASTM D3124-98 and ASTM D6248-98 apply for determination of double bonds in the LDPE component (i). The LDPE component (i) in this method description, referred to as "the polymer".

The methods ASTM D3124-98, and ASTM D6248-98, include on one hand a procedure for the determination of the amount of double bonds/1000 C-atoms which is based upon the ASTM D3124-98 method. In the ASTM D3124-98 method, a detailed description for the determination of vinylidene groups/1000 C-atoms is given based on 2,3-dimethyl-1,3-butadiene. In the ASTM D6248-98 method, detailed descriptions for the determination of
vinyl and *trans*-vinylene groups/1000 C-atoms are given based on 1-octene and *trans-*3-hexene, respectively. The described sample preparation procedures therein have here been applied for the determination of vinyl groups/1000 C-atoms, vinylidene groups/1000 C-atoms and *trans*-vinylene groups/1000 C-atoms in the present invention. The ASTM D6248-98 method suggests possible inclusion of the bromination procedure of the ASTM D3124-98 method but the samples with regard to the present invention were not brominated. For the determination of the extinction coefficient for these three types of double bonds, the following three compounds have been used: 1-decene for vinyl, 2-methyl-1-heptene for vinylidene and *trans*-4-decene for *trans*-vinylene and the procedures as described in ASTM D3124-98 and ASTM-D6248-98 were followed with the above-mentioned exception.

The total amount of vinyl bonds, vinylidene bonds and *trans*-vinylene double bonds of "the polymer" was analyzed by means of IR spectrometry and given as the amount of vinyl bonds, vinylidene bonds and *trans*-vinylene bonds per 1000 carbon atoms.

The polymers to be analyzed were pressed to thin films with a thickness of 0.5-1.0 mm. The actual thickness was measured. FT-IR analysis was performed on a Perkin Elmer Spectrum One. Two scans were recorded with a resolution of 4 cm¹.
1) Polymer compositions comprising polyethylene homopolymers and copolymers or polyethylene homopolymers and copolymers, except polyethylene copolymers with > 0.4 wt% comonomer.
   For polyethylenes three types of C=C containing functional groups were quantified, each with a characteristic absorption and each calibrated to a different model compound resulting in individual extinction coefficients:
   - vinyl (R-CH=CH2) via 910 cm⁻¹ based on 1-decene [dec-1-ene] giving E = 13.13 l·mol⁻¹·mm⁻¹
   - vinylidene (RR'C=CH2) via 888 cm⁻¹ based on 2-methyl-1-heptene [2-methyhept-1-ene] giving E = 18.24 l·mol⁻¹·mm⁻¹
   - trans-vinylene (R-CH=CH-R') via 965 cm⁻¹ based on trans-4-decene [(E)-dec-4-ene] giving E = 15.14 l·mol⁻¹·mm⁻¹
   For polyethylene homopolymers or copolymers with < 0.4 wt% of polar comonomer linear baseline correction was applied between approximately 980 and 840 cm⁻¹.
2) Polymer compositions comprising polyethylene copolymers, such as terpolymers, or polyethylene copolymers with > 0.4 wt% polar comonomer For polyethylene copolymers with > 0.4 wt% of polar comonomer two types of C=C containing functional groups were quantified, each with a characteristic absorption and each calibrated to a different model compound resulting in individual extinction coefficients:
   - vinyl (R-CH=CH2) via 910 cm⁻¹ based on 1-decene [dec-1-ene] giving E = 13.13 l·mol⁻¹·mm⁻¹
   - vinylidene (RR'C=CH2) via 888 cm⁻¹ based on 2-methyl-1-heptene [2-methyhept-1-ene] giving E = 18.24 l-mol⁻¹·mm⁻¹

For ethylene butyl acrylate systems linear baseline correction was applied between approximately 920 and 870 cm⁻¹.

For ethylene ethyl acrylate systems linear baseline correction was applied between approximately 920 and 825 cm⁻¹.

For ethylene methyl acrylate systems linear baseline correction was applied between approximately 930 and 870 cm⁻¹.

The methods ASTM D3124-98, and ASTM D6248-98, include on the other hand also a procedure to determine the molar extinction coefficient. At least three 0.18 mol•l⁻¹ solutions in carbon disulphide (CS₂) were used and the mean value of the molar extinction coefficient used.

The amount of vinyl groups originating from the polyunsaturated comonomer per 1000 carbon atoms was determined and calculated as follows:

The polymer to be analyzed and a reference polymer have been produced on the same reactor, basically using the same conditions, i.e similar peak temperatures, pressures and production rate, but with the only difference that the polyunsaturated comonomer is added during polymerization of the polymer to be analyzed and not added during the polymerization of the reference polymer. The total amount of vinyl groups of each polymer was determined by FT-IR measurements, as described herein.

A base level of vinyl groups, formed naturally by the process and from chain transfer agents resulting in vinyl groups (if present), is assumed to be the same for the reference polymer and the polymer to be analyzed. This base level is then subtracted from the measured amount of vinyl groups in the polymer to be analyzed, thereby resulting in the amount of vinyl groups/1000 C- atoms, which result from the polyunsaturated comonomer.

### Experiments

### Starting materials:

| | |
|---|---|
| **low density polyethylene (LDPE) copolymer with at least one, preferably one polyunsaturated comonomer optionally in combination with one or more further comonomers** | an ethylene-1,7-octadiene-butylacrylate terpolymer with a vinyl content of around 0.48 vinyls/1000 C was prepared by a high pressure process. MFR2 (ISO1133; 190°C) = 2 g/10min |
| **unsaturated ethylene acrylate polymer** | |
| **Additive composition** | a composition consisting of PEG20000 (CAS number: 25322-68-3) and a mixture of 4,4'-thiobis (2-tertbutyl-5-methylphenol), (CAS number 96-69-5) plus thiodiethylene bis[3-(3,5-di-tert-butyl-4-hydroxyphenyl)propionate] (CAS number 41484-35-9) |
| **Peroxide crosslinking agent** | Dicumylperoxide (DCP) (CAS number 80-43-3) |
| **Scorch retarding agent** | 2,4-Diphenyl-4-methyl-1-pentene (CAS 6362-80-7) |

### Process details for low density polyethylene (LDPE) copolymer with at least one polyunsaturated comonomer optionally in combination with one or more further comonomers

In general, high pressure radical initiated polymerization of ethylene can be effected in a tubular or an autoclave reactor at pressures in the range of 1200 to 3500 bars and a temperature in the range of 120 to 350 °C. Further details about high pressure radical polymerization is given in Encyclopedia of Polymer Science and Engineering, Vol 6 (1986), pp. 383-410 and in Encyclopedia of Materials: Science and Technology, Elsevier Science Ltd.: 'Polyethylene: High-pressure', R. Klimesch, D. Littmann and F.-O. Mähling, pp. 7181-7184 (2001), which are herewith incorporated as reference.

The ethylene-1,7-octadiene-butylacrylate terpolymer used as the low density polyethylene (LDPE) copolymer with at least one, polyunsaturated comonomer optionally in combination with one or more further comonomers (as used in the examples) was produced in a tubular reactor by polymerizing ethylene together with 1,7-octadiene and butylacrylate and chain transfer agent(s) to reach the described polymer properties such as vinyl content and MFR value.

High pressure polymerization of ethylene can be effected in a tubular or in an autoclave reactor at pressures in the range of 1200 to 3500 bars and a temperature in the range of 120 to 350 C. The LDPE terpolymer used in the examples was produced in a tubular reactor by polymerizing ethylene together with 1,7-octadiene and butylacrylate and CTA(s) to reach the described polymer properties such as vinyl content and MFR value.

Further details about high pressure radical polymerization is given in Encyclopedia of Polymer Science and Engineering, Vol 6 (1986), pp. 383-410 and in Encyclopedia of Materials: Science and Technology, Elsevier Science Ltd.:'Polyethylene: High-pressure', R: Klimesch, D. Littmann and F.-O. Mähling, pp. 7181-7184 (2001), which are herewith incorporated as reference.

### Preparation of polymer compositions

Antioxidant(s) and polyethylene glycol were added to polyethylene pellets by lab scale compounding via melt mixing followed by pelletizing. Crosslinking agent was added to pellets of the prepared compositions, also in lab scale. The crosslinking agent was added to the polyethylene compositions by distributing the crosslinking agent (DCP is in molten form) at 70 °C onto pellets of the compositions prepared via compounding. The pellets were kept at 80 °C until the pellets became dry. The amount of crosslinking agent used to crosslink the different compositions are presented in the descriptions of the inventive and comparative compositions. The scorch retarding agent (CAS number 6362-80-7; 2,4-Diphenyl-4-methyl-1-pentene) has been added in a similar manner as the crosslinking agent.

| | Example | Comparative Example |
|---|---|---|
| Low density polyethylene | ethylene-1,7-octadiene-butylacrylate terpolymer | ethylene-1,7-octadiene-butylacrylate terpolymer |
| | 0.48 (vinyl groups/ 1000C) | 0.48 (vinyl groups / 1000C) |
| | 97.04 wt.-% | 96.95 wt.-% |
| an additive composition consisting of polyethylene glycol and a mixture of 4,4'-thiobis (2-tertbutyl-5-methylphenol), plus thiodiethylene bis[3-(3,5-di-tert-butyl-4-hydroxyphenyl)propio nate] | PEG20000 CAS number: 25322-68-3 | PEG20000 CAS number: 25322-68-3 |
| | 4,4'-thiobis (2-tertbutyl-5-methyl phenol) | 4,4'-thiobis (2-tertbutyl-5-methyl phenol) |
| | and | |
| | thiodiethylene bis[3-(3,5-di-tert-butyl-4-hydroxyphenyl)propionate] | |
| total of additive composition (PEG + both stabilizers; PEG + single stabilizer respectively) | 1.0 wt.-% (additive composition) | 0.85 wt.-% (additive composition) |
| PEG | 0.59 wt.-% PEG20000 | 0.59 wt.-% PEG20000 |
| 4,4'-thiobis (2-tertbutyl-5-methyl phenol) | 0.18 wt.-% 4,4'-thiobis (2-tertbutyl-5-methyl phenol) | 0.26 wt.-% 4,4'-thiobis (2-tertbutyl-5-methyl phenol) |
| Thiodiethylene bis[3-(3,5-di-tert-butyl-4-hydroxyphenyl)propio nate] | 0.24 wt.-% Thiodiethylene bis[3-(3,5-di-tert-butyl-4-hydroxyphenyl)propionate] | - |
| a peroxide crosslinking agent | Dicumylperoxide (DCP) | Dicumylperoxide (DCP) |
| amount of peroxide crosslinking agent | 1.57 wt.-% | 1.81 wt.-% |
| a scorch retarding agent | 2,4-Diphenyl-4-methyl-1-pentene CAS 6362-80-7 | 2,4-Diphenyl-4-methyl-1-pentene CAS 6362-80-7 |
| Amount of scroch retarding agent | 0.39 wt.-% | 0.39 wt.-% |
| total | 100 wt.-% | 100 wt.-% |

Upon preparation of a crosslinked plaque, the hot set values were determined.

Results are shown below.

### Results:

| | | Example | Comparative Example |
|---|---|---|---|
| Hot set elongation | % | 62 | 49 |
| Permanent deformation | % | 0.9 | 1.4 |
| Monsanto scorch measured at 135 °C | min | 176.6 | 159.3 |
| Thermo-oxidation stability (at 150°C; cellular oven) | | | |
| Ageing time (days) | | Stress at break | Stress at break |
| 0 | MPa | 19.1 | 15.4 |
| 10 | MPa | 18.4 | 19.4 |
| 20 | MPa | 16.8 | 15.3 |
| 30 | MPa | 15.3 | 14.8 |
| 35 | MPa | 14.0 | 14.9 |
| Thermo-oxidation stability (at 150°C; cellular oven) | | | |
| Ageing time (days) | | Strain at break | Strain at break |
| 0 | % | 492 | 402 |
| 10 | % | 493 | 487 |
| 20 | % | 461 | 418 |
| 30 | % | 432 | 409 |
| 35 | % | 394 | 308 |

It can be seen that the thermo-oxidative ageing performance of the inventive example was very good and was further achieved on a lower level of peroxide crosslinking agent. The inventive composition also showed significant better Monsanto scorch compared to the comparative example. The thermo-oxidation stability in terms of stress at break and strain at break was improved.

In a further experiment, the long-term storage stability (of the inventive example) was evaluated by storing pellets under different conditions (time and temperature) and the amounts of antioxidant(s), peroxide and scorch retarder that migrate to the pellet surface were determined. The results at time zero and after one year storage at 23 °C and 35°C respectively are presented below:

| | Migration to surface in ppm | | | |
|---|---|---|---|---|
| storage time one year at 23°C | 4,4'-thiobis (2-tertbutyl-5-methyl phenol) | 2,2'-thiodiethylene bis[3-(3,5-di-tert-butyl-4-hydroxyphenyl)propionate] | Dicumylperoxide DCP (crosslinking agent) | 2,4-Diphenyl-4-methyl-1-pentene (scorch retarder) |
| 0 | 0 | 30 | 117 | 32 |
| 12 | 0 | 139 | 152 | 40 |
| storage time one year at 35°C | | | | |
| 0 | 0 | 30 | 117 | 32 |
| 12 | 0 | 18 | 103 | 33 |

The results show low migration to the surface levels of the components. Surprisingly there was no migration of 4,4'-thiobis (2-tertbutyl-5-methylphenol) neither at +23°C nor at +35°C.

In a further experiment, the water tree retardant properties of the inventive example were evaluated by the so-called model cable test. In this test a small cable core is extruded and crosslinked. The core consists of a conductor, inner semicon layer, insulation layer and an outer semicon layer. The breakdown strength, expressed by the Weibull 63.2% value, referred to as Eb(63 %) was determined on these model cables before the wet ageing and when the cable core has been exposed to 1000 h in the wet ageing test.

### Results (inventive example):

Eb(63 %, 0 h) ≥98.7 kV/mm
Eb(63 %, 1000 h) = 90.7 kV/mm.

These results show that the breakdown strength, expressed by the Weibull 63.2% value, referred to as Eb after exposing the material for 1000 h wet ageing remains on the same level as before the wet ageing.

## Claims

1. A crosslinkable polymer composition, comprising
i) a low density polyethylene (LDPE) copolymer with at least one, preferably one polyunsaturated comonomer optionally in combination with one or more further comonomers; and
ii) an additive composition consisting of polyethylene glycol and a mixture of 4,4'-thiobis (2-tertbutyl-5-methylphenol) plus
thiodiethylene bis[3-(3,5-di-tert-butyl-4-hydroxyphenyl)propionate]; and
iii) a peroxide crosslinking agent; and
iv) a scorch retarding agent.

2. The crosslinkable polymer composition according to claim 1, wherein said low density polyethylene (LDPE) copolymer is an unsaturated ethylene acrylate polymer.

3. The crosslinkable polymer composition according to claim 1 or 2, wherein said low density polyethylene (LDPE) copolymer, preferably said unsaturated ethylene acrylate polymer has a total amount of vinyl groups per 1000 carbon atoms of more than 0.40 (as described herein).

4. The crosslinkable polymer composition according to any one of the preceding claims, comprising
i) an unsaturated ethylene acrylate polymer having a total amount of vinyl groups per 1000 carbon atoms of more than 0.40 (as described herein); and
ii) an additive composition consisting of polyethylene glycol and a mixture of
4,4'-thiobis (2-tertbutyl-5-methylphenol) plus
thiodiethylene bis[3-(3,5-di-tert-butyl-4-hydroxyphenyl)propionate]; and
iii) a peroxide crosslinking agent; and
iv) a scorch retarding agent.

5. The crosslinkable polymer composition of claim 4, wherein the unsaturated ethylene acrylate polymer is a terpolymer.

6. The crosslinkable polymer composition of claim 4 or 5, wherein the unsaturated ethylene acrylate polymer is an ethylene butylacrylate terpolymer.

7. The crosslinkable polymer composition of any one of claims 4 to 6, wherein the unsaturated ethylene acrylate polymer is an unsaturated ethylene acrylate non-conjugated diene terpolymer.

8. The crosslinkable polymer composition according to any one of the preceding claims, comprising
i) more than 95.5 w.-%, more preferably 96.0 wt.-% based on the total weight of the crosslinkable polymer composition of the low density polyethylene (LDPE) copolymer with at least one polyunsaturated comonomer optionally in combination with one or more further comonomers, preferably of the unsaturated ethylene acrylate polymer, and
ii) 0.50 to 1.65 wt.-%, preferably 0.90 to 1.20 wt.-% based on the total weight of the crosslinkable polymer composition of an additive composition consisting of polyethylene glycol and a mixture of 4,4'-thiobis (2-tertbutyl-5-methylphenol), plus
thiodiethylene bis[3-(3,5-di-tert-butyl-4-hydroxyphenyl)propionate;
iii) up to 1.80 wt.-% based on the total weight of the crosslinkable polymer composition of a peroxide crosslinking agent; and
iv) 0.1 to 0.5 wt.-% based on the total weight of the crosslinkable polymer composition of a scorch retarding agent.

9. The crosslinkable polymer composition of claim 8, wherein additives (v) other than contained in the additive composition (ii) and/or other than scorch retarding agent iv) are present in a total amount of less than 0.40 wt.-% based on the total weight of the crosslinkable polymer composition, and whereby components i), ii), iii), iv), and v) add up to 100 wt.-%.

10. The crosslinkable polymer composition according to any one of claims 1 to 9, wherein 4,4'-thiobis (2-tertbutyl-5-methylphenol) is present in an amount of 0.12 to 0.22 wt.-% with respect to the total crosslinkable polymer composition.

11. The crosslinkable polymer composition according to any one of claims 1 to 10, wherein thiodiethylene bis[3-(3,5-di-tert-butyl-4-hydroxyphenyl)propionate is present in an amount of 0.10 to 0.40 wt.-% with respect to the total crosslinkable polymer composition.

12. The crosslinkable polymer composition according to any one of claims 1 to 11, wherein polyethylene glycol is present in an amount of 0.40 to 0.80 wt.-% with respect to the total crosslinkable polymer composition.

13. Use of the crosslinkable polymer composition according to any one of claims 1 to 12 for cables.

14. Material as obtained by crosslinking the crosslinkable polymer composition according to any one of claims 1 to 12, preferably **characterized in that** extruded model cables have a breakdown strength, expressed by the Weibull 63.2% value, referred to as Eb(63 %) after 1000 hours of wet ageing as described in the specification of at least 75.0 kV/mm, preferably at least 85.0 kV/mm.

15. Cable comprising the material of claim 14.
